# EUROPEAN PATENT APPLICATION

(11) **EP 4 732 929 A1**
(43) Date of publication of application: **29.04.2026**
(21) Application number: 24831829.7
(22) Date of filing: 20.06.2024
(51) Int. Cl.: B01D 53/04

(54) **ACIDIC GAS ADSORPTION DEVICE**

(30) Priority: 26.06.2023 JP 2023104333
(71) Applicant: NGK Insulators, Ltd., Nagoya-shi, Aichi 467-8530 (JP)
(72) Inventor: OKUMA, Yusuke, Nagoya-shi, Aichi 467-8530 (JP); ANDO, Junichi, Nagoya-shi, Aichi 467-8530 (JP); TAKAHASHI, Michio, Nagoya-shi, Aichi 467-8530 (JP); KAN, Hirofumi, Nagoya-shi, Aichi 467-8530 (JP)
(74) Representative: MERH-IP Matias Erny Reichl Hoffmann Patentanwälte PartG mbB
(86) International application number: PCT/JP2024/022460
(87) International publication number: WO 2025/004968

(57) **Abstract**

Provided is an acid gas adsorption device capable of stably maintaining excellent acid gas adsorption performance. An acid gas adsorption device according to an embodiment of the present disclosure includes an acid gas adsorption part in contact with an acid gas flow passage. The acid gas adsorption part includes: an acid gas adsorption material capable of adsorbing an acid gas; and a deterioration inhibitor. The solubility of an acid gas to be a target in the deterioration inhibitor at 25°C is 0.1 mol/kg or more. The vapor pressure of the deterioration inhibitor at 25°C is 30 Pa or less.

## Description

### Technical Field

The present disclosure relates to an acid gas adsorption device.

### Background Art

In recent years, an attempt has been made to separate and capture an acid gas in the atmosphere in order to reduce an environmental load. The acid gas is mainly, for example, carbon dioxide, which is a cause of global warming. As a typical example of such attempt, a Carbon dioxide Capture, Utilization and Storage (CCUS) cycle has been known.

As a carbon dioxide adsorption device to be used for such separation and capture of carbon dioxide, there has been proposed an absorbent structure for capturing carbon dioxide, the structure including: a honeycomb base material in which a plurality of partition walls are arranged, to thereby form a plurality of flow channels; and functional structural unit groups arranged in and on the partition walls (see, for example, Patent Literature 1).

In the absorbent structure for capturing carbon dioxide, carbon dioxide can be captured from a gas fluid flowing through the absorbent structure, and the captured carbon dioxide can be desorbed under a predetermined heating condition. However, when the adsorption and desorption of carbon dioxide contained in the atmosphere are repeated through use of the absorbent structure for capturing carbon dioxide described in Patent Literature 1, the carbon dioxide adsorption performance may be gradually decreased owing to the repetition of heating treatment.

### Citation List

### Patent Literature

[PTL 1] WO 2013/119929 A1

### Summary of Invention

### Technical Problem

A primary object of the present disclosure is to provide an acid gas adsorption device capable of sufficiently maintaining excellent acid gas adsorption performance.

### Solution to Problem

[1] An acid gas adsorption device according to an embodiment of the present disclosure includes an acid gas adsorption part. The acid gas adsorption part includes an acid gas adsorption material and a deterioration inhibitor. The acid gas adsorption material can adsorb an acid gas. The solubility of an acid gas to be a target in the deterioration inhibitor at 25°C is 0.1 mol/kg or more. The vapor pressure of the deterioration inhibitor at 25°C is 30 Pa or less.
[2] In the acid gas adsorption device according to the above-mentioned item [1], the acid gas adsorption part may be an acid gas adsorption layer arranged on a surface of a base material. That is, the acid gas adsorption device may further include a base material that supports the acid gas adsorption layer.
[3] In the acid gas adsorption device according to the above-mentioned item [2], the acid gas adsorption layer may include a first layer arranged on a surface of the base material and a second layer arranged on at least part of a surface of the first layer. The first layer includes the acid gas adsorption material and has acid gas adsorption capacity. The second layer faces the acid gas flow passage and includes the deterioration inhibitor.
[4] In the acid gas adsorption device according to the above-mentioned item [2], the acid gas adsorption layer may have a single-layer structure. The acid gas adsorption layer having the single-layer structure faces the acid gas flow passage and has acid gas adsorption capacity.
[5] In the acid gas adsorption device according to any one of the above-mentioned items [1] to [4], the acid gas adsorption part may further include a porous carrier. The porous carrier supports the acid gas adsorption material.
[6] In the acid gas adsorption device according to any one of the above-mentioned items [1] to [5], the acid gas may be carbon dioxide.

### Advantageous Effects of Invention

According to the embodiment of the present disclosure, the acid gas adsorption device capable of sufficiently maintaining excellent acid gas adsorption performance can be achieved.

### Brief Description of Drawings

FIG. 1 is a schematic perspective view of an acid gas adsorption device according to one embodiment of the present disclosure.
FIG. 2 is a schematic sectional view of the acid gas adsorption device of FIG. 1.
FIG. 3 is a schematic sectional view of an acid gas adsorption part included in the acid gas adsorption device of FIG. 2 according to one embodiment.
FIG. 4 is a schematic sectional view of the acid gas adsorption part included in the acid gas adsorption device of FIG. 2 according to another embodiment.

### Description of Embodiments

Embodiments of the present disclosure are described below with reference to the drawings. However, the present disclosure is not limited to these embodiments. In addition, for clearer illustration, some widths, thicknesses, shapes, and the like of respective portions may be schematically illustrated in the drawings in comparison to the embodiments. However, the widths, the thicknesses, the shapes, and the like are each merely an example, and do not limit understanding of the present disclosure.

### A. Overview of Acid Gas Adsorption Device

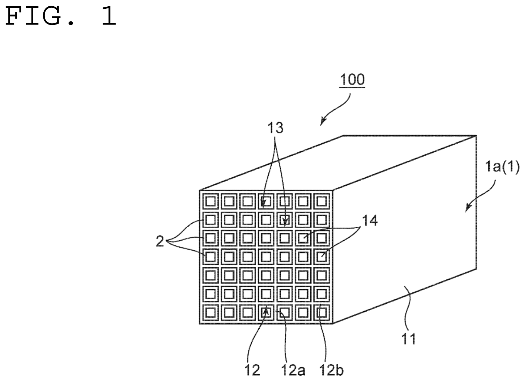

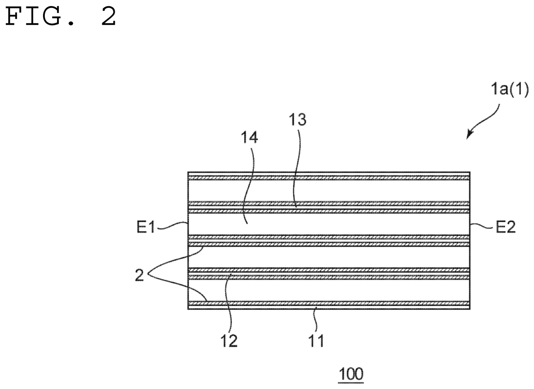

FIG. **1** is a schematic perspective view of an acid gas adsorption device according to one embodiment of the present disclosure, and FIG. **2** is a schematic sectional view of the acid gas adsorption device of FIG. **1****.**

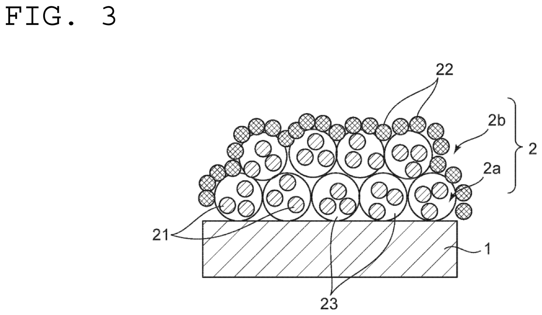

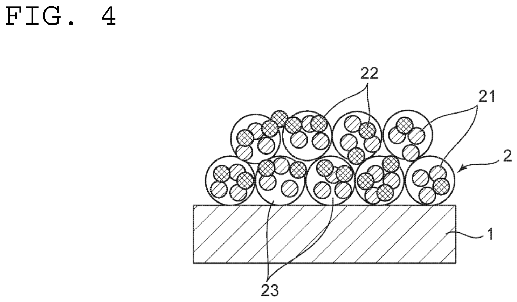

An acid gas adsorption device **100** in the illustrated example includes acid gas adsorption parts **2.** Each of the acid gas adsorption parts **2** faces an acid gas flow passage **14.** In other words, the acid gas adsorption part **2** is in contact with the acid gas flow passage **14.** The acid gas adsorption part **2** includes an acid gas adsorption material and a deterioration inhibitor. The acid gas adsorption part **2** is typically an acid gas adsorption layer arranged on the surface of a base material **1.** The acid gas adsorption layer **2** may have a multilayer structure including a plurality of layers (see FIG. **3**) or a single-layer structure (see FIG. **4**). The acid gas adsorption material can adsorb an acid gas. The solubility of an acid gas to be a target in the deterioration inhibitor at 25°C is 0.1 mol/kg or more. The vapor pressure (saturated vapor pressure) of the deterioration inhibitor at 25°C is 30 Pa or less.

With such configuration, the deterioration inhibitor having the above-mentioned vapor pressure is included in the acid gas adsorption part, and hence the volatilization of the acid gas adsorption material in a desorption step to be described later and/or the escape of the acid gas adsorption material due to the contact with a fluid (hereinafter sometimes referred to as "wear") can be suppressed. In addition, the solubility of the acid gas in the deterioration inhibitor is as described above, and hence, even when the acid gas adsorption part includes the deterioration inhibitor, the acid gas can be sufficiently dissolved in the deterioration inhibitor to be stably brought into contact with the acid gas adsorption material. As a result, the deterioration of acid gas adsorption performance of the acid gas adsorption device can be suppressed, and excellent acid gas adsorption performance can be sufficiently maintained. Thus, the lifetime of the acid gas adsorption device can be extended.

The solubility of the acid gas in the deterioration inhibitor at 25°C is 0.1 mol/kg or more, preferably 0.2 mol/kg or more, more preferably 0.4 mol/kg or more, still more preferably 1.5 mol/kg or more. When the deterioration inhibitor has such solubility of the acid gas, an excellent adsorption speed can be achieved without hindrance of the contact between the acid gas and the acid gas adsorption material. As a result, the acid gas adsorption performance of the acid gas adsorption device can be improved. Meanwhile, it is preferred that the solubility of the acid gas in the deterioration inhibitor at 25°C be as high as possible. The solubility of the acid gas in the deterioration inhibitor at 25°C is, for example, 20.0 mol/kg or less, for example, 15.0 mol/kg or less, or for example, 8.0 mol/kg or less.

The solubility of the acid gas in the deterioration inhibitor is measured, for example, by a volumetric method or a gravimetric method for measuring an amount of dissolution.

The vapor pressure (saturated vapor pressure) of the deterioration inhibitor is typically lower than the vapor pressure (saturated vapor pressure) of the acid gas adsorption material. In other words, the deterioration inhibitor is not easily volatilized as compared to the acid gas adsorption material.

The vapor pressure of the deterioration inhibitor at 25°C is 30 Pa or less, preferably 10 Pa or less, more preferably 5 Pa or less. When the deterioration inhibitor has such vapor pressure, the volatilization and/or wear of the acid gas adsorption material can be sufficiently suppressed. As a result, the lifetime of the acid gas adsorption device can be stably extended. Meanwhile, it is preferred that the vapor pressure of the deterioration inhibitor at 25°C be as low as possible. The vapor pressure of the deterioration inhibitor at 25°C is typically 0 Pa or more.

The vapor pressure of the deterioration inhibitor at 25°C is measured, for example, with any appropriate pressure gauge (vapor pressure gauge), more specifically, by a gas flow method.

The vapor pressure of the acid gas adsorption material at 25°C is, for example, from 30 Pa to 10,000 Pa, preferably from 35 Pa to 5,000 Pa.

The difference between the vapor pressure of the acid gas adsorption material at 25°C and the vapor pressure of the deterioration inhibitor (i.e., vapor pressure of acid gas adsorption material-vapor pressure of deterioration inhibitor) is, for example, from 0.1 Pa to 9,000 Pa, preferably from 1.0 Pa to 4,000 Pa. When the vapor pressure difference between the acid gas adsorption material and the deterioration inhibitor falls within such ranges, the volatilization and/or wear of the acid gas adsorption material can be sufficiently suppressed.

Any appropriate acid gas adsorption material may be selected in accordance with the acid gas to be adsorbed by the acid gas adsorption device.

Examples of the acid gas include carbon dioxide (CO₂), hydrogen sulfide, sulfur dioxide, nitrogen dioxide, dimethyl sulfide (DMS), and hydrogen chloride. In one embodiment, the acid gas is carbon dioxide (CO₂), and the gas to be treated as a fluid is a carbon dioxide-containing gas. The carbon dioxide-containing gas may also contain nitrogen in addition to carbon dioxide. The carbon dioxide-containing gas is typically air (atmosphere). A case in which the acid gas is carbon dioxide is described in detail below.

When the acid gas is carbon dioxide, the acid gas adsorption material is a carbon dioxide adsorption material.

As the carbon dioxide adsorption material, any appropriate compound capable of adsorbing and desorbing carbon dioxide may be adopted. An example of the carbon dioxide adsorption material is a nitrogen-containing compound.

The nitrogen-containing compound may be in a liquid state or a solid state at normal temperature and normal pressure (23°C, 0.1 MPaA (absolute pressure)).

More specific examples of the nitrogen-containing compound include: primary amines, such as monoethanolamine and polyvinylamine; secondary amines, such as diethanolamine, a cyclic amine, and N-(3-aminopropyl)diethanolamine; tertiary amines, such as methyldiethylamine and triethanolamine; ethylene amine compounds such as tetraethylenepentamine; aminosilane coupling agents, such as aminopropyltrimethoxysilane, 3-aminopropyltriethoxysilane, N-(2-aminoethyl)-3-aminopropyltrimethoxysilane, and polyethyleneimine-trimethoxysilane; organic polymers each having a primary amino group to a tertiary amino group; organic monomers each having a primary amino group to a tertiary amino group; piperazine compounds such as 1-(2-hydroxyethyl) piperazine; and organic/inorganic compounds each having imparted thereto an amino group as a substituent. The carbon dioxide adsorption materials may be used alone or in combination thereof.

Of such carbon dioxide adsorption materials, a carbon dioxide adsorption material that is in a liquid state at normal temperature and normal pressure (23°C, 0.1 MPaA (absolute pressure)) is preferred, an organic polymer having a primary amino group to a tertiary amino group is more preferred, and polyethylene imine is still more preferred.

The content ratio of the acid gas adsorption material in the acid gas adsorption layer 2 is, for example, from 5 mass% to 70 mass%, preferably from 10 mass% to 30 mass%.

As the deterioration inhibitor, any appropriate compound having the above-mentioned solubility and vapor pressure may be adopted. The deterioration inhibitor is typically in a liquid state at normal temperature and normal pressure (23°C, 0.1 MPaA (absolute pressure)). The deterioration inhibitor may have acid gas adsorption capacity or may have substantially no acid gas adsorption capacity.

Examples of the deterioration inhibitor include an ionic liquid and a deep eutectic solvent. Those deterioration inhibitors may be used alone or in combination thereof.

The ionic liquid is a "salt" of a liquid formed of only ions (anions and cations). Examples of the cation of the ionic liquid include an ammonium-based ion, a phosphonium-based ion, a sulfonium salt, and an inorganic ion.

In one embodiment, the cation of the ionic liquid is an ammonium-based cation.

Examples of the ammonium-based cation include an imidazolium salt, a pyridinium salt, pyrrolidinium, piperidinium, an aliphatic ammonium, and guanidinium.

Of those ammonium-based cations, an aliphatic ammonium and guanidinium are preferred.

Examples of the aliphatic ammonium include amino group-containing aliphatic ammoniums such as 2,2'-diaminodiethylammonium (DETAH).

Examples of the guanidinium include tetraalkylguanidiniums such as 1,1,3,3-tetramethylguanidinium (TMGH).

Examples of the anion of the ionic liquid include: halogen-based anions, such as a bromide ion and triflate; boron-based anions such as tetraphenyl borate; phosphorus-based anions such as hexafluorophosphate; sulfur-based anions such as an alkyl sulfonate; phenoxide (PhO); and imidazolate (Im). The ionic liquids may be used alone or in combination thereof.

The deep eutectic solvent typically contains a hydrogen bond donor (HBD) and a hydrogen bond acceptor (HBA).

Examples of the hydrogen bond donor (HBD) include: carboxylic acid-containing organic compounds typified by decanoic acid; ester-containing organic matter typified by phenyl salicylate; alcohols typified by decanol, ethylene glycol (EG), amino propanol (AP), and menthol; phenols typified by thymol; ketone-containing organic matter typified by camphor; and vanilloids typified by vanillin. The HBDs may be used alone or in combination thereof.

Examples of the hydrogen-bond acceptor (HBA) include: ammonium salts each having a halogen or a hydroxy anion typified by tetra-n-octylammonium bromide, 1-methylimidazolium chloride (HMIM-Cl), and 1,8-diazabicyclo[5.4.0]undeca-7-ene (DBU); amine compound salts each having a halogen or a hydroxy anion typified by triethylenetetramine chloride; monocyclic monoterpenoids typified by carvone; and carboxylic acid-containing organic compounds typified by lauric acid. The HBAs may be used alone or in combination thereof.

The HBD and the HBA are mixed at any appropriate ratio to form the deep eutectic solvent. Those deep eutectic solvents may be used alone or in combination thereof.

Of such deterioration inhibitors, in the case of the ionic liquid, imidazolium salts serving as cations and halogen-based anions, such as triflate, are preferred. Alternatively, in the case of the deep eutectic solvent, a carboxylic acid-containing organic compound typified by decanoic acid, the compound serving as a hydrogen bond donor (HBD), and a halogen- or hydroxy anion-containing ammonium salt typified by tetra-n-octylammonium bromide, the salt serving as a hydrogen bond acceptor (HBA), are preferred.

In addition, a combination of the cation and the anion in the ionic liquid is preferably, for example, a combination of guanidinium and phenoxide, or a combination of an aliphatic ammonium and imidazolate, more preferably, for example, a combination of an amino group-containing aliphatic ammonium and imidazolate, still more preferably, for example, a combination of DETAH and imidazolate.

In addition, a combination of the HBA and the HBD in the deep eutectic solvent is preferably, for example, a combination of a halogen- or hydroxy anion-containing ammonium salt and an alcohol, or a combination of a vanilloid and a monocyclic monoterpenoid, more preferably, for example, a combination of a halogen- or hydroxy anion-containing ammonium salt and an alcohol, still more preferably, for example, a combination of HMIM-Cl and AP, or a combination of DBU and EG.

The content ratio of the deterioration inhibitor in the acid gas adsorption layer is, for example, from 0.1 part by mass to 70 parts by mass, preferably from 5 parts by mass to 30 parts by mass with respect to 1 part by mass of the acid gas adsorption material. When the content ratio of the deterioration inhibitor falls within such ranges, the acid gas adsorption performance of the acid gas adsorption device can be sufficiently maintained for a long period of time.

In one embodiment, the acid gas adsorption layer 2 further includes a porous carrier in addition to the above-mentioned acid gas adsorption material and deterioration inhibitor. The porous carrier supports at least the acid gas adsorption material. When the acid gas adsorption material layer includes the porous carrier, the escape of the acid gas adsorption material from the acid gas adsorption material layer can be suppressed in an adsorption step and/or a desorption step.

The porous carrier may form mesopores in the acid gas adsorption material layer. Examples of the porous carrier include: metal organic frameworks (MOFs), such as MOF-74, MOF-200, and MOF-210; activated carbon; nitrogen-doped carbon; mesoporous silica; mesoporous alumina; zeolite; a carbon nanotube; and a fluorinated resin such as polyvinylidene fluoride (PVDF). Of those, for example, metal organic frameworks (MOFs), activated carbon, PVDF, zeolite, mesoporous silica, and mesoporous alumina are preferred. The porous carriers may be used alone or in combination thereof.

The BET specific surface area of the porous carrier is, for example, 50 m²/g or more, preferably 500 m²/g or more. When the porous carrier has such surface area, the acid gas adsorption material can be stably supported, and hence an improvement in acid gas adsorption efficiency can be achieved. The upper limit of the BET specific surface area of the porous carrier is typically 2,000 m²/g or less.

When the acid gas adsorption material layer includes the porous carrier, the content ratio of the porous carrier in the acid gas adsorption material layer is, for example, from 0.1 part by mass to 10 parts by mass, preferably from 0.5 part by mass to 2.0 parts by mass with respect to 1 part by mass of the acid gas adsorption material. When the content ratio of the porous carrier falls within such ranges, the acid gas adsorption material can be more stably supported.

The acid gas adsorption layer **2** may further include any appropriate additive. Examples of the additive include an organic binder, an inorganic binder, a surfactant, and a plasticizer. The content ratio of the additive is adjusted to any appropriate content ratio.

Now, a specific configuration of the acid gas adsorption device **100** is described.

In one embodiment, the acid gas adsorption device **100** further includes the base material **1** that supports the acid gas adsorption layer **2.**

### B. Base Material

The structure of the base material **1** is not particularly limited, and is, for example, a honeycomb-like structure, a filter structure such as a filtration cloth, or a pellet structure. The acid gas adsorption layer **2** is not particularly limited as long as the layer is arranged on the surface of any such base material **1.**

In one embodiment, the base material **1** is a honeycomb-like base material **1a**. The honeycomb-like base material **1a** includes partition walls **12** that define a plurality of cells **13.**

The cells **13** each extend from a first end surface **E1** (inflow end surface) of the honeycomb-like base material **1a** to a second end surface **E2** (outflow end surface) thereof in the lengthwise direction (axial direction) of the honeycomb-like base material **1a** (see FIG. **2**). The cells **13** each have any appropriate shape in a cross section in a direction perpendicular to the lengthwise direction of the honeycomb-like base material **1a**. The sectional shapes of the cells are each, for example, a triangle, a quadrangle, a pentagon, a hexagon or a higher polygon, a circle, or an ellipse. The sectional shapes and sizes of the cells may be all the same, or may be at least partly different. Of such sectional shapes of the cells, for example, a hexagon or a quadrangle is preferred, and a square, a rectangle, or a hexagon is more preferred.

A cell density in a cross section in the direction perpendicular to the lengthwise direction of the honeycomb-like base material (specifically, the number of the cells **13** per unit area) may be appropriately set in accordance with purposes. The cell density may be, for example, from 4 cells/cm² to 320 cells/cm². When the cell density falls within such range, the strength and effective geometric surface area (GSA) of the honeycomb-like base material can be sufficiently ensured.

The honeycomb-like base material **1a** has any appropriate shape (overall shape). The shape of the honeycomb-like base material is, for example, a cylinder with a circle as its bottom, an elliptic cylinder with an ellipse as its bottom, a prismatic column with a polygon as its bottom, or a column with an indefinite shape as its bottom. The honeycomb-like base material **1a** of the illustrated example has a prismatic columnar shape. The outer diameter and length of the honeycomb-like base material may be appropriately set in accordance with purposes. The honeycomb-like base material may have a hollow region in a center portion thereof in the cross section in the direction perpendicular to the lengthwise direction, though the hollow region is not shown.

In addition, the honeycomb-like base material **1a** may be divided into a plurality of portions in the lengthwise direction and/or the direction perpendicular to the lengthwise direction.

The honeycomb-like base material **1a** typically includes: an outer wall **11;** and the partition wall **12** positioned inside the outer wall **11.** In the illustrated example, the outer wall **11** and the partition wall **12** are integrally formed. The outer wall **11** and the partition wall **12** may be separate bodies.

In the illustrated example, the outer wall **11** has a rectangular cylindrical shape. The thickness of the outer wall **11** may be set to any appropriate thickness. The thickness of the outer wall **11** is, for example, from 0.1 mm to 10 mm.

The partition wall **12** defines the plurality of cells **13.** More specifically, the partition wall **12** has a first partition wall **12a** and a second partition wall **12b** perpendicular to each other, and the first partition wall **12a** and the second partition wall **12b** define the plurality of cells **13.** The sectional shapes of the cells **13** are each a substantially quadrangular shape. The configuration of the partition wall is not limited to the partition wall **12** described above. The partition wall may have a first partition wall extending in a radial direction and a second partition wall extending in a circumferential direction, which define a plurality of cells.

The thickness of the partition wall **12** may be appropriately set in accordance with the applications of the acid gas adsorption device. The thickness of the partition wall **12** is typically smaller than the thickness of the outer wall **11.** The thickness of the partition wall **12** is, for example, from 0.03 mm to 0.6 mm. The thickness of the partition wall is measured, for example, through sectional observation with a scanning electron microscope (SEM). When the thickness of the partition wall falls within such range, the honeycomb-like base material can ensure sufficient mechanical strength, and can also ensure a sufficient opening area (total area of the cells in a cross section).

The porosity of the partition wall **12** may be appropriately set in accordance with purposes. The porosity of the partition wall **12** is, for example, from 15% to 70%, preferably from 20% to 45%. The porosity is measured, for example, by mercury porosimetry.

The bulk density of the partition wall **12** may be appropriately set in accordance with purposes. The bulk density is, for example, from 0.10 g/cm³ to 0.60 g/cm³, preferably from 0.20 g/cm³ to 0.50 g/cm³. The bulk density is measured, for example, by mercury porosimetry.

A material for forming the partition wall **12** is typically, for example, a ceramic. Examples of the ceramic include silicon carbide, a silicon-silicon carbide-based composite material, cordierite, mullite, alumina, silicon nitride, spinel, a silicon carbide-cordierite-based composite material, lithium aluminum silicate, and aluminum titanate. The materials for forming the partition walls may be used alone or in combination thereof. Of those materials for forming the partition walls, for example, cordierite, alumina, mullite, silicon carbide, a silicon-silicon carbide-based composite material, and silicon nitride are preferred, and silicon carbide and a silicon-silicon carbide-based composite material are more preferred.

Such honeycomb-like base material **1a** is typically produced by the following method. First, a binder and water or an organic solvent are added to material powder including ceramic powder described above as required. The resultant mixture is kneaded to provide a body, and the body is molded (typically extruded) into a desired shape. After that, the body is dried, and is fired as required. Thus, the honeycomb-like base material **1a** is produced. When the firing is adopted, the body is fired at, for example, from 1,200°C to 1,500°C. A firing time period is, for example, from 1 hour to 20 hours.

Any appropriate surface-treated layer (e.g., a dense layer) may be formed, as required, on the surface of the base material **1** on which the acid gas adsorption layer **2** is arranged (e.g., the surface of the partition wall **12**).

### C. Acid Gas Adsorption Layer

In the illustrated example, the acid gas adsorption layer **2** is formed on the surface of the partition wall **12.** The thickness of the acid gas adsorption layer **2** is not particularly limited. The thickness of the acid gas adsorption layer **2** is, for example, from 10 µm to 1,000 µm, preferably from 50 µm to 500 µm.

In the acid gas adsorption device **100,** an acid gas flow passage **14** is formed in a portion (typically, a center portion) in a cross section of the cell **13** in which the acid gas adsorption layer **2** is not formed. The acid gas adsorption layer **2** may be formed on the entire inner surface of the partition wall **12** (specifically, so as to surround the acid gas flow passage **14**) as in the illustrated example, or may be formed on part of the surface of the partition wall. When the acid gas adsorption layer **2** is formed on the entire inner surface of the partition wall **12,** an improvement in acid gas (typically, carbon dioxide) adsorption efficiency can be achieved.

The acid gas flow passage **14** extends from the first end surface **E1** (inflow end surface) to the second end surface **E2** (outflow end surface) as with the cells **13.** A direction in which the acid gas flow passage **14** extends and a direction of passage of the fluid are typically parallel to each other. Examples of the sectional shape of the acid gas flow passage **14** include the same sectional shapes as those of the cells **13** described above. Of those, for example, a hexagon or a quadrangle is preferred, and a square, a rectangle, or a hexagon is more preferred. The sectional shapes and sizes of the acid gas flow passage **14** may be all the same, or may be at least partly different.

The cells **13** (more specifically, the acid gas flow passages **14**) are each typically supplied with a gas to be treated containing an acid gas in the adsorption step to be described later, and are each supplied with a desorption gas in the desorption step to be described later.

### C-1. Acid Gas Adsorption Layer having Multilayer Structure

As illustrated in FIG. **3****,** the acid gas adsorption layer **2** may have a multilayer structure including a plurality of layers. In the illustrated example, the acid gas adsorption layer **2** includes a first layer **2a** and a second layer **2b.** The first layer **2a** is arranged on the surface of the base material **1** (typically, the partition wall **12** of the honeycomb-like base material **1a**). The first layer **2a** includes the above-mentioned acid gas adsorption material **21.** The first layer **2a** has acid gas adsorption capacity. The second layer **2b** is arranged on at least part of the surface of the first layer **2a** and faces the acid gas flow passage **14.** The second layer **2b** includes the above-mentioned deterioration inhibitor **22.**

When the acid gas adsorption layer has such multilayer structure, the volatilization and/or wear of the acid gas adsorption material included in the first layer can be sufficiently suppressed by the second layer. In addition, the solubility of the acid gas in the deterioration inhibitor included in the second layer is suitably adjusted, and hence the acid gas can pass through the second layer to reach the first layer, and can be stably brought into contact with the acid gas adsorption material included in the first layer. As a result, the deterioration of the acid gas adsorption performance of the acid gas adsorption device can be suppressed, and excellent acid gas adsorption performance can be sufficiently maintained.

The content ratio of the acid gas adsorption material **21** in the first layer **2a** is, for example, from 5 mass% to 70 mass%, preferably from 10 mass% to 30 mass%.

In one embodiment, the first layer **2a** includes the above-mentioned porous carrier **23** at the above-mentioned content ratio in addition to the above-mentioned acid gas adsorption material **21.** In this case, the acid gas adsorption material **21** is supported on the porous carrier **23** in the first layer **2a.**

The thickness of the first layer **2a** is, for example, from 10 µm to 1,000 µm, preferably from 50 µm to 500 µm. When the thickness of the first layer falls within such ranges, excellent acid gas adsorption performance can be stably imparted to the acid gas adsorption device.

The second layer **2b** is typically stacked on the first layer **2a.** The second layer **2b** is located on the opposite side of the first layer **2a** to the base material **1.** The second layer **2b** may be formed over the entire surface of the first layer **2a** or only on part of the surface of the first layer **2a.** The second layer **2b** preferably covers the entirety of the first layer **2a.**

The content ratio of the deterioration inhibitor **22** in the second layer **2b** is, for example, from 0.001 mass% to 100 mass%, preferably from 0.5 mass% to 5.0 mass%.

The thickness of the second layer **2b** is typically smaller than the thickness of the first layer **2a.** The thickness of the second layer **2b** is, for example, from 0.01 µm to 500 µm, preferably from 1.0 µm to 100 µm. When the thickness of the second layer falls within such ranges, the volatilization and/or wear of the acid gas adsorption material can be stably suppressed.

The acid gas adsorption layer **2** including the first layer **2a** and the second layer **2b** is typically produced by the following method.

First, as required, the above-mentioned porous carrier is dispersed in any appropriate dispersion medium to prepare a carrier dispersion liquid. Then, the carrier dispersion liquid is applied onto the surface of the above-mentioned base material by any appropriate coating method. After that, as required, the coating film is dried to form a carrier-containing film.

Next, the above-mentioned acid gas adsorption material is dissolved in any appropriate solvent to prepare an adsorption material solution. After that, the adsorption material solution is applied onto the surface of the above-mentioned base material or carrier-containing film by any appropriate coating method.

When the adsorption material solution is applied onto the surface of the carrier-containing film, the adsorption material solution is impregnated into the carrier-containing film. After that, as required, the carrier-containing film is dried to form a first layer including the acid gas adsorption material and the porous carrier.

When the adsorption material solution is applied onto the surface of the base material, the coating film is dried, as required, to form a first layer including the acid gas adsorption material.

Next, the above-mentioned deterioration inhibitor is applied onto the surface of the above-mentioned first layer by any appropriate coating method. After that, the coating film on the first layer is dried, as required, to form a second layer including the deterioration inhibitor.

As described above, the acid gas adsorption layer **2** including the first layer **2a** and the second layer **2b** is produced.

### C-2. Acid Gas Adsorption Layer having Single-layer Structure

In another embodiment, as illustrated in FIG. **4****,** the acid gas adsorption layer **2** has a single-layer structure. The acid gas adsorption layer **2** having a single-layer structure faces the acid gas flow passage **14** and has acid gas adsorption capacity. The acid gas adsorption layer **2** includes the acid gas adsorption material **21** and the deterioration inhibitor **22** at the above-mentioned content ratios, respectively. In the acid gas adsorption layer **2** having a single-layer structure, the acid gas adsorption material **21** and the deterioration inhibitor **22** are dispersed.

Even when the acid gas adsorption layer has such single-layer structure, the deterioration of the acid gas adsorption performance of the acid gas adsorption device can be suppressed, and excellent acid gas adsorption performance can be stably maintained.

In one embodiment, the acid gas adsorption layer **2** includes the above-mentioned porous carrier **23** at the above-mentioned content ratio in addition to the above-mentioned acid gas adsorption material **21** and deterioration inhibitor **22.** In this case, the acid gas adsorption material **21** and the deterioration inhibitor **22** are each supported on the porous carrier **23** in the acid gas adsorption layer **2.**

The acid gas adsorption layer **2** having a single-layer structure is typically produced by the following method.

First, as required, the above-mentioned porous carrier is dispersed in any appropriate dispersion medium to prepare a carrier dispersion liquid. Then, the carrier dispersion liquid is applied onto the surface of the above-mentioned base material by any appropriate coating method. After that, as required, the coating film is dried to form a carrier-containing film.

Next, the above-mentioned acid gas adsorption material and the above-mentioned deterioration inhibitor are dissolved in any appropriate solvent to prepare an adsorption material-inhibitor solution. The order of addition of the acid gas adsorption material and the deterioration inhibitor is not particularly limited. After that, the adsorption material-inhibitor solution is applied onto the surface of the above-mentioned base material or carrier-containing film by any appropriate coating method.

When the adsorption material-inhibitor solution is applied onto the surface of the carrier-containing film, the adsorption material-inhibitor solution is impregnated into the carrier-containing film. After that, as required, the carrier-containing film is dried to form an acid gas adsorption layer including the acid gas adsorption material, the deterioration inhibitor, and the porous carrier.

When the adsorption material-inhibitor solution is applied onto the surface of the base material, the coating film is dried, as required, to form an acid gas adsorption layer including the acid gas adsorption material and the deterioration inhibitor.

As described above, the acid gas adsorption layer 2 having a single-layer structure is produced.

### D. Method of Capturing Acid Gas

Next, a method of capturing an acid gas with use of the acid gas adsorption device according to one embodiment of the present disclosure is described. The method of capturing an acid gas typically includes the adsorption step and the desorption step.

In the adsorption step, a gas to be treated containing an acid gas is supplied to the acid gas adsorption layer 2 adjusted to a predetermined adsorption temperature. When the gas to be treated is a carbon dioxide-containing gas, the concentration of carbon dioxide in the carbon dioxide-containing gas before being supplied to the acid gas adsorption device is, for example, from 100 ppm (based on a volume) to 2 vol%.

As illustrated in FIG. **2****,** in one embodiment, the gas to be treated containing the acid gas passes through the acid gas flow passage **14** included in the acid gas adsorption device **100** and is brought into contact with the acid gas adsorption layer **2** facing the acid gas flow passage **14.** In this case, the acid gas adsorption layer **2** includes the deterioration inhibitor, and hence the escape of the acid gas adsorption material due to the gas to be treated passing through the acid gas flow passage **14** can be suppressed. In addition, the acid gas can be dissolved in the deterioration inhibitor, and hence the acid gas adsorption material included in the acid gas adsorption layer **2** and the acid gas can be sufficiently brought into contact with each other. As a result, the acid gas adsorption material adsorbs the acid gas (typically, carbon dioxide) from the gas to be treated.

After that, the gas to be treated reduced in amount of the acid gas is discharged from the acid gas adsorption device **100** as a treated gas.

A temperature (adsorption temperature) of the acid gas adsorption layer in the adsorption step is, for example, from 0°C to 50°C, preferably from 10°C to 40°C. In one embodiment, the adsorption temperature is equal to an outside air temperature. An operation time period of the adsorption step (adsorption time) is, for example, from 15 minutes to 3 hours, preferably from 30 minutes to 2 hours.

When the adsorption temperature and/or the adsorption time falls within the above-mentioned ranges, the acid gas adsorption material can efficiently adsorb the acid gas.

An acid gas adsorption rate in the adsorption step (=100-(concentration of the acid gas in the treated gas/concentration of the acid gas in the gas to be treated before being supplied to the acid gas adsorption part×100)) is, for example, 60% or more, preferably 75% or more, more preferably 80% or more. Meanwhile, the upper limit of the acid gas adsorption rate in the adsorption step is typically 90%.

In the desorption step, the acid gas adsorption device 100 is typically heated to a desorption temperature exceeding the adsorption temperature. More specifically, in the desorption step, after the temperature of the acid gas adsorption layer 2 is raised to the desorption temperature, the acid gas adsorption layer 2 is maintained at the desorption temperature for a predetermined desorption time. As a result, the acid gas, which has been adsorbed by the acid gas adsorption material in the adsorption step, is desorbed from the acid gas adsorption material. Thus, the desorbed acid gas can be captured.

In one embodiment, in the desorption step, the desorption gas heated to the above-mentioned desorption temperature is caused to pass through the acid gas flow passage 14 of the acid gas adsorption device 100. Thus, the desorbed acid gas is captured together with the desorption gas. The gas captured in the desorption step is sometimes referred to as "captured gas." Examples of the desorption gas include water vapor, CO₂, and a captured gas previously captured with the acid gas adsorption device.

In the desorption step, the acid gas can also be captured without use of the desorption gas. For example, the desorbed acid gas may be sucked and captured with a decompression pump. Further, the desorption gas and the decompression pump may be used in combination.

The temperature of the acid gas adsorption layer in the desorption step (desorption temperature) is, for example, from 70°C to 200°C, preferably from 80°C to 110°C. In the desorption step, even when the acid gas adsorption layer is heated to such desorption temperature, the volatilization of the acid gas adsorption material can be stably suppressed because the acid gas adsorption layer includes the deterioration inhibitor.

An operation time period of the desorption step (desorption time for which the acid gas adsorption part is maintained at the desorption temperature) is, for example, from 1 minute to 1 hour, preferably from 5 minutes to 30 minutes. When the desorption temperature and/or the desorption time falls within the above-mentioned ranges, the acid gas can be sufficiently desorbed from the acid gas adsorption material.

As described above, the acid gas can be efficiently captured while the acid gas adsorption performance of the acid gas adsorption device is sufficiently maintained. With such acid gas adsorption device, the adsorption step and the desorption step can be repeatedly performed. In one embodiment, the cycle of the adsorption step and the desorption step is performed, for example, 10 times or more, preferably 30 times or more, more preferably 50 times or more, still more preferably 100 times or more.

### Examples

The present disclosure is specifically described below by way of Examples and Comparative Examples, but the present disclosure is not limited by these Examples. A measurement method for each characteristic of a deterioration inhibitor to be used in each of Examples and Comparative Examples is as described below.

### <Example 1>

A body containing alumina, silica, and magnesia (i.e., cordierite) was extruded and then dried to prepare a honeycomb-like base material illustrated in FIG. **1****.** The honeycomb-like base material had a square column shape. The length of one side of a bottom surface of the honeycomb-like base material was 120 mm. In addition, the length of the honeycomb-like base material was 100 mm. The honeycomb-like base material included: partition walls defining a plurality of cells; and outer peripheral walls surrounding the partition walls. The sectional shape of each of the cells was a square shape. The cell density in the honeycomb-like base material was 62 cells/cm², the thickness of each of the partition walls was 0.1 mm, and the porosity of each of the partition walls was 40%.

Next, the porous carrier was dispersed in a dispersion medium to prepare a carrier dispersion liquid. Then, under normal temperature and normal pressure (23°C, 0.1 MPaA (absolute pressure)), the carrier dispersion liquid was applied onto each of the partition walls of the honeycomb-like base material. After that, the coating film of the carrier dispersion liquid was dried to form a carrier-containing film including the porous carrier.

In addition, an acid gas adsorption material was dissolved in a solvent to prepare an adsorption material solution. Then, under normal temperature and normal pressure (23°C, 0.1 MPaA (absolute pressure)), the adsorption material solution was applied onto the surface of the carrier-containing film. In this case, the adsorption material solution was impregnated into the carrier-containing film. After that, the carrier-containing film containing the adsorption material solution was dried to form a first layer including the acid gas adsorption material and the porous carrier. The thickness of the first layer was 100 µm.

Next, [TMGH] [PhO] (ionic liquid, cation: 1,1,3,3-tetramethylguanidinium, anion: phenoxide) serving as a deterioration inhibitor was flowed into the cells of the honeycomb-like base material having the first layer formed thereon under normal temperature and normal pressure (23°C, 0.1 MPaA (absolute pressure)). As a result, the ionic liquid was applied onto the surface of the first layer to form a second layer including the ionic liquid. The thickness of the second layer was 1 µm. The solubility of an acid gas (carbon dioxide gas) (acid gas solubility) in the deterioration inhibitor and the vapor pressure of the deterioration inhibitor are shown in Table 1.

As a result, an acid gas adsorption layer including the first layer and the second layer was formed on each of the partition walls of the honeycomb-like base material, to thereby prepare an acid gas adsorption device (carbon dioxide adsorption device).

The content ratio of the ionic liquid in the acid gas adsorption layer was 0.5 part by mass with respect to 1 part by mass of the acid gas adsorption material.

### <Example 2>

An acid gas adsorption device was prepared in the same manner as in Example 1 except that the [TMGH] [PhO] serving as the deterioration inhibitor was changed to [DETAH] [Im] (ionic liquid, cation: 2,2'-diaminodiethylammonium, anion: imidazolate).

### <Example 3>

An acid gas adsorption device was prepared in the same manner as in Example 1 except that the [TMGH] [PhO] serving as the deterioration inhibitor was changed to [HMIM]Cl-AP (deep eutectic solvent, mixed solution of hydrogen bond donor: amino propanol and hydrogen bond acceptor: 1-methylimidazolium chloride).

### <Example 4>

An acid gas adsorption device was prepared in the same manner as in Example 1 except that the [TMGH] [PhO] serving as the deterioration inhibitor was changed to DBU-EG (deep eutectic solvent, mixed solvent of hydrogen bond donor: ethylene glycol and hydrogen bond acceptor: 1,8-diazabicyclo[5.4.0]undeca-7-ene).

### <Example 5>

An acid gas adsorption device was prepared in the same manner as in Example 1 except that the [TMGH] [PhO] serving as the deterioration inhibitor was changed to vanillin-carvone (deep eutectic solvent, mixed solvent of vanillin and carvone, vanillin:carvone=1:3) .

### <Comparative Example 1>

An acid gas adsorption device was prepared in the same manner as in Example 1 except that the [TMGH] [PhO] serving as the deterioration inhibitor was changed to monoethanolamine (MEA) .

### <Comparative Example 2>

An acid gas adsorption device was prepared in the same manner as in Example 1 except that the [TMGH] [PhO] serving as the deterioration inhibitor was changed to polyethylene glycol.

### <Reference Example 1>

An acid gas adsorption device was prepared in the same manner as in Example 1 except that only the first layer including the acid gas adsorption material and the porous carrier was used as the acid gas adsorption layer without formation of the second layer including the deterioration inhibitor.

### <Evaluation of Acid Gas (CO₂) Adsorption Performance>

The acid gas adsorption device obtained in each of Examples, Comparative Examples, and Reference Example was accommodated in a quartz tube reactor so that the extending direction of the cells was parallel to the vertical direction. Then, after the gas flow passage was purged with nitrogen at 100°C, the acid gas adsorption device was cooled to room temperature (23°C). A mixed gas (0.04 vol% of CO₂ in nitrogen) was flowed through the gas flow passage of the acid gas adsorption device at 25°C and a flow rate of 2 m/s for 15 minutes. The CO₂ concentration in the mixed gas passing through the gas flow passage was measured, and the above-mentioned acid gas adsorption rate (%) was calculated.

Next, the acid gas adsorption performance of the acid gas adsorption device in each of Examples and Comparative Examples was evaluated based on the acid gas adsorption rate in the acid gas adsorption device of Reference Example.

More specifically, when the acid gas adsorption rate in the acid gas adsorption device of Reference Example was set to 100%, a case in which the acid gas adsorption rate was less than 40% was evaluated as "C", a case in which the acid gas adsorption rate was 40% or more and 90% or less was evaluated as "B", and a case in which the acid gas adsorption rate was more than 90% was evaluated as "A". The results thereof are shown in Table 1.

### <Evaluation of High-temperature Durability>

The mass (initial mass) of the acid gas adsorption layer included in the acid gas adsorption device obtained in each of Examples and Comparative Examples was measured.

Then, after the acid gas adsorption device was held at 120°C for 100 hours, the mass of the acid gas adsorption layer (mass after heating) in the acid gas adsorption device after heating was measured.

Next, the high-temperature durability of the acid gas adsorption layer was evaluated based on the initial mass of the acid gas adsorption layer.

More specifically, when the initial mass of the acid gas adsorption layer was set to 100%, a case in which the mass after heating of the acid gas adsorption layer was less than 90% was evaluated as "C", a case in which the mass after heating of the acid gas adsorption layer was 90% or more and 98% or less was evaluated as "B", and a case in which the mass after heating of the acid gas adsorption layer was more than 98% was evaluated as "A". The results thereof are shown in Table 1.

**Table 1**

| No. | Deterioration inhibitor | | | Evaluation | |
|---|---|---|---|---|---|
| | Material | Solubility of acid gas | Vapor pressure | Acid gas adsorption performance | Change in mass of acid gas adsorption layer |
| Example 1 | [TMGH] [PhO] (Ionic liquid) | 0.24 mol/kg | 1 Pa or less | B | A |
| Example 2 | [DETAH] [Im] (Ionic liquid) | 11.9 mol/kg | 1 Pa or less | A | A |
| Example 3 | [HMIM] CI-AP (Deep eutectic solvent) | 0.4 mol/kg | 1 Pa or less | A | A |
| Example 4 | DBU-EG (Deep eutectic solvent) | 12.2 mol/kg | 1 Pa or less | A | A |
| Example 5 | Vanillin-carvone (Deep eutectic solvent) | 0.2 mol/kg or more | 7.4 Pa or less | B | B |
| Comparative Example 1 | Monoethanolamine (MEA) | 10 mol/kg or more | 36 Pa | A | C |
| Comparative Example 2 | Polyethylene glycol | 0.0 mol/kg | 1 Pa or less | C | A |

As is apparent from Table 1, it is understood that, when the acid gas adsorption layer includes a deterioration inhibitor having a vapor pressure of 30 Pa or less at 25°C, a change in mass of the acid gas adsorption layer is suppressed under a high-temperature environment. Thus, when the acid gas adsorption device is subjected to the above-mentioned desorption step, the volatilization and/or wear of the acid gas adsorption material can be suppressed.

In addition, it is understood that, when the solubility of the acid gas in the deterioration inhibitor is 0.1 mol/kg or more, the acid gas adsorption device exhibits excellent acid gas adsorption performance.

As a result, when the vapor pressure of the deterioration inhibitor is 30 Pa or less and the solubility of the acid gas thereof is 0.1 mol/kg or more, excellent acid gas adsorption performance can be stably maintained in the acid gas adsorption device.

### Industrial Applicability

The acid gas adsorption device according to the embodiment of the present disclosure can be used for separation and capture of an acid gas, and particularly, can be suitably used for a Carbon dioxide Capture, Utilization and Storage (CCUS) cycle.

### Reference Signs List

- **1**: base material
- **2**: acid gas adsorption layer (part)
- **21**: acid gas adsorption material
- **22**: deterioration inhibitor
- **23**: porous carrier
- **100**: acid gas adsorption device

## Claims

1. An acid gas adsorption device, comprising an acid gas adsorption part that is in contact with an acid gas flow passage,
wherein the acid gas adsorption part includes:
an acid gas adsorption material capable of adsorbing an acid gas; and
a deterioration inhibitor having a solubility of the acid gas to be a target of 0.1 mol/kg or more at 25°C and a vapor pressure of 30 Pa or less at 25°C.

2. The acid gas adsorption device according to claim 1, wherein the acid gas adsorption part is an acid gas adsorption layer arranged on a surface of a base material.

3. The acid gas adsorption device according to claim 2, wherein the acid gas adsorption layer includes:
a first layer including the acid gas adsorption material and having acid gas adsorption capacity, the first layer being arranged on the surface of the base material; and
a second layer, which is arranged on at least part of a surface of the first layer and faces the acid gas flow passage, the second layer including the deterioration inhibitor.

4. The acid gas adsorption device according to claim 2, wherein the acid gas adsorption layer has a single-layer structure facing the acid gas flow passage and having acid gas adsorption capacity.

5. The acid gas adsorption device according to claim 1, wherein the acid gas adsorption part further includes a porous carrier configured to support the acid gas adsorption material.

6. The acid gas adsorption device according to claim 1, wherein the acid gas is carbon dioxide.
